# EUROPEAN PATENT APPLICATION

(11) **EP 4 693 605 A1**
(43) Date of publication of application: **11.02.2026**
(21) Application number: 25191716.7
(22) Date of filing: 24.07.2025
(51) Int. Cl.: H01M 10/61, H01M 10/647, H01M 10/65, H01M 10/659, H01M 50/103

(54) **BATTERY CELL**

(30) Priority: 08.08.2024 KR 20240106161
(71) Applicant: SK On Co., Ltd., Seoul 03161 (KR)
(72) Inventor: LEE, Seung Min, 34124 Daejeon (KR)
(74) Representative: Stolmár & Partner Patentanwälte PartG mbB

(57) **Abstract**

The present disclosure relates to a battery cell according to an embodiment of the present disclosure includes: a cell case including a first body forming a first accommodation space for accommodating an electrode assembly therein; a second body accommodating at least a portion of the first body; and a second accommodation space formed between the first body and the second body; and a variable member disposed in the second accommodation space and connected to the first body, and connected to or separated from the second body according to a preset variable temperature.

## Description

### BACKGROUND OF THE INVENTION

### 1. Field

The present disclosure relates to battery cells. More particularly, it relates to a battery cell with improved thermal stability.

### 2. Description of the Related Art

A typical battery cell or secondary battery can change its performance, lifespan, and reliability depending on its temperature. Therefore, thermal management of battery cells is one of the most important aspects of battery cell management. Typically, battery cells are packaged in a metal case with excellent thermal conductivity. This is because the metal casing is favorable for heat dissipation, which prevents the battery cell from degrading or thermal runaway due to heat generation. In addition, the casing is generally formed in a single layer.

In addition, in order to overcome the performance degradation of battery cells in low-temperature environments, the system level of battery modules or battery packs adopts the method of heating the battery cells through thermal management fluids such as air or liquid. However, this method suffers from high energy consumption due to inevitable heat loss due to continuous heat dissipation to the outside.

First, in accordance with one aspect of the present disclosure, an embodiment of the present disclosure is to provide a battery cell with improved the thermal stability of battery cells.

Second, in accordance with another aspect of the present disclosure, an embodiment of the present disclosure is to provide a battery cell with improved the lifetime of a battery cell.

Third, in accordance with another aspect of the present disclosure, an embodiment of the present disclosure is to provide a battery cell with reduced the energy consumption required for thermal management of battery cells.

The present disclosure can be widely applied in the field of green technology such as electric vehicle, battery charging station, energy storage system (ESS), photovoltaics, wind power, etc. that utilize batteries. Further, the battery cells according to the present disclosure can be used in eco-friendly mobility, including electric and hybrid vehicles to prevent climate change by reducing air pollution and greenhouse gas emissions.

### SUMMARY OF THE INVENTION

A battery cell according to an embodiment of the present disclosure may comprise: a cell case including a first body forming a first accommodation space for accommodating an electrode assembly therein; a second body accommodating at least a portion of the first body; and a second accommodation space formed between the first body and the second body; and a variable member disposed in the second accommodation space and connected to the first body, and connected to or separated from the second body according to a preset variable temperature.

In an embodiment, the cell case may further comprise a first opening formed on a side of the first body and communicating with the outside, a second opening formed on a side of the second body positioned in the same direction as the side of the first body, and a connecting surface connecting the perimeter of the first opening and the perimeter of the second opening along the perimeter of the first opening to separate the second accommodation space from the outside.

In an embodiment, the cell case may further comprise a cap assembly in contact with the connecting surface and covering the first opening.

In an embodiment, the variable member may comprise a first layer having a first coefficient of thermal expansion; and a second layer disposed on the first layer and having a second coefficient of thermal expansion smaller than the first coefficient of thermal expansion.

In an embodiment, the first layer may be located closer to the first body than the second layer.

In an embodiment, the battery cell may further comprise a support member disposed in the second accommodation space spacing the first body and the second body.

In an embodiment, the first body may comprise a first bottom forming the bottom surface of the first accommodation space, a first elongate side and a second elongate side extending from an edge of the first bottom and facing each other among the sides of the first accommodation space, and a first connecting side and a second connecting side extending from an edge of the first bottom and facing each other, and connecting with the first elongate side and the second elongate side, and wherein the second body comprises a second bottom opposite the first bottom, a first opposing side and a second opposing side facing the first elongate side and the second elongate side respectively, and a first spaced apart side and a second spaced apart side facing the first connecting side and the second connecting side respectively.

In an embodiment, the variable member may be a plural, and the plurality of variable members may comprise a first variable member disposed between the first bottom and the second bottom, a second variable member disposed between the first elongate side and the first opposing side, and a third variable member disposed between the second elongate side and the second opposing side.

In an embodiment, the plurality of variable members may further comprise a fourth variable member disposed between the first connecting side and the first spaced apart side and a fifth variable member disposed between the second connecting side and the second spaced apart side.

In an embodiment, the first variable member, the second variable member, and the third variable member may be each provided in plurality.

In an embodiment, the battery cell may further comprise: a plurality of support members disposed in the second accommodation space and spacing the first body and the second body apart.

In an embodiment, the plurality of support members may be disposed on an outer surface of the first body along a perimeter of the first bottom.

In an embodiment, the plurality of support members may be disposed in a region including each vertex of the first bottom.

In an embodiment, the pressure in the second accommodation space may be less than or equal to the external atmospheric pressure.

In an embodiment, the second accommodation space may be in a vacuum.

In an embodiment, the variable member maintains a first state in which it is connected to the first body, and is separated from the second body at a temperature below the variable temperature, and the variable member is transformed into a second state in which it is in contact with the second body to connect the first body and the second body at a temperature higher than or equal to the variable temperature.

First, in accordance with one embodiment of the present disclosure, the thermal stability of battery cells may be improved.

Second, in accordance with another embodiment of the present disclosure, the lifetime of a battery cell may be improved.

Third, in accordance with another embodiment of the present disclosure, the energy consumption required for thermal management of battery cells may be reduced

### BRIEF DESCRIPTION OF THE DRAWINGS

FIG. 1 is an example of a battery cell according to the present disclosure.
FIG. 2 is an example of a cell case according to the present disclosure.
FIG. 3 is an example of a disassembling a cell case according to the present disclosure.
FIG. 4 is a front view of a battery cell according to the present disclosure.
FIG. 5 is a top view of a battery cell according to the present disclosure.
FIG. 6 illustrates a variable member in a first state according to the present disclosure.
FIG. 7 illustrates the variable member in a second state according to the present disclosure.

### DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification. In the following, a battery, a secondary battery, or a cell is used as a term having the same meaning as a battery cell.

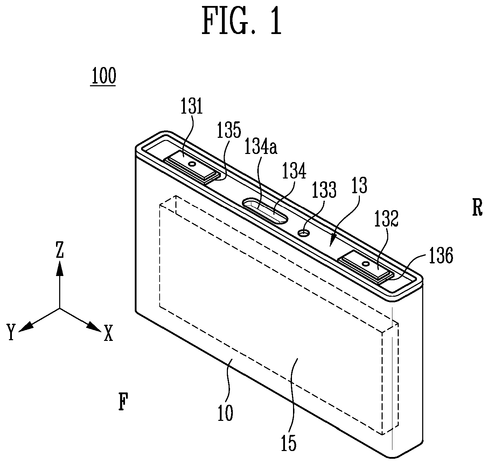

FIG. 1 is an example of a battery cell according to the present disclosure.

More specifically, FIG. 1 is a perspective view illustrating a secondary cell according to one embodiment of the present invention.

Referring to FIG. 1, a battery cell 100 according to one embodiment of the present invention may include a cell case 10 that includes an electrode assembly 15 therein.

The electrode assembly 15 may comprise a first electrode (not shown), a second electrode (not shown), and a separator (not shown) disposed between the first electrode and the second electrode for producing or storing electrical energy. The electrode assembly 15 may be formed by disposing the first electrode, the second electrode, and the separator, or may be formed by winding.

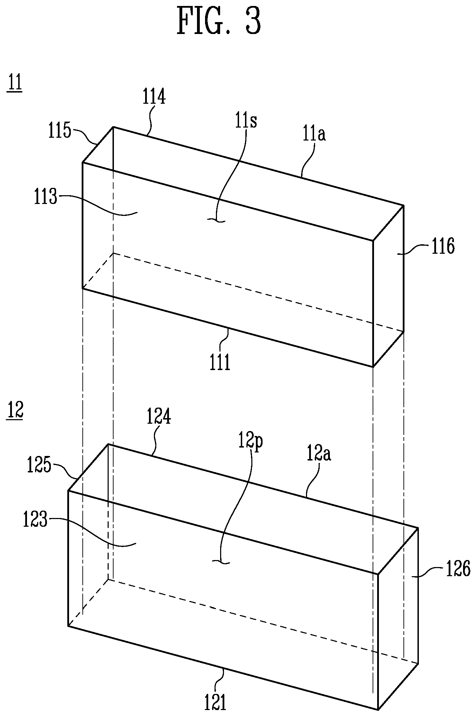

The cell case 10 may accommodate the electrode assembly 15 therein. Specifically, the cell case 10 may comprise a first body 11 (see FIG. 3) forming a first accommodation space 11s (see FIG. 3) accommodating the electrode assembly 15 therein, a second body 12 (see FIG. 3) accommodating at least a portion of the first body 11, and a second accommodation space 12s (see FIG. 3) formed between the first body 11 and the second body 12.

Further, the cell case 10 may include a first terminal portion 131 and a second terminal portion 132 protruding from the cell case 10 for electrically connecting the electrode assembly 15 to the outside. The first terminal portion 131 and the second terminal portion 132 may have different electrical polarities.

The cell case 10 may be formed of aluminum, or may be an aluminum alloy containing portions of metallic materials such as nickel, iron, copper, manganese, and molybdenum, or may be formed of a conductive metal such as steel plated with nickel.

Further, the cell case 10 may have a hexahedral shape comprising an opening (or first opening 11a, see FIG. 3) with a side open to accommodate the electrode assembly 15. However, the embodiment is not limited to this. That is, the shape of the cell case 10 may be varied according to an embodiment.

The cell case 10 may further comprise a cap assembly 13 coupled to the first body 11 and the second body 12 to cover the first opening 11a.

The first terminal portion 131 and the second terminal portion 132 may protrude outwardly through the cap assembly 13.

The cap assembly 13 may comprise an outer injection hole 133 and an outer venting hole 134. After the cap assembly 13 is coupled with the first body 11 and second body 12, electrolyte may be injected into the interior of the cell case 10 through the outer injection hole 133. Further, the outer injection hole 133 may be sealed by a sealing stopper after injection of the electrolyte.

The outer venting hole 134 may be sealed with a vent plate 134a to allow the internal pressure of the cell case 10 to vent. When the internal pressure of the cell case 10 reaches a set pressure, the vent plate 134a may be incised to open the outer venting hole 134.

The cell case 10 may comprise a first skirt 135 and a second skirt 136 wrapped around a perimeter of the first terminal portion 131 and the second terminal portion 132, respectively. That is, the first skirt 135 and the second skirt 136 may enclose at least a portion of the first terminal portion 131 and the second terminal portion 132. The first gasket 135 and the second gasket 136 may electrically isolate the first terminal portion 131 and the second terminal portion 132 from the cap assembly 13.

The first terminal portion 131 and the second terminal portion 132 may be spaced apart in a first direction X. The first terminal portion 131 and the second terminal portion 132 may be exposed on top of the outer cover 130. However, this is by way of example only and not by way of limitation.

The present disclosure utilizes prismatic battery cells to illustrate the features of battery cells according to the present disclosure, but the disclosure may also be applicable to other shaped battery cells (e.g., cylindrical battery cells).

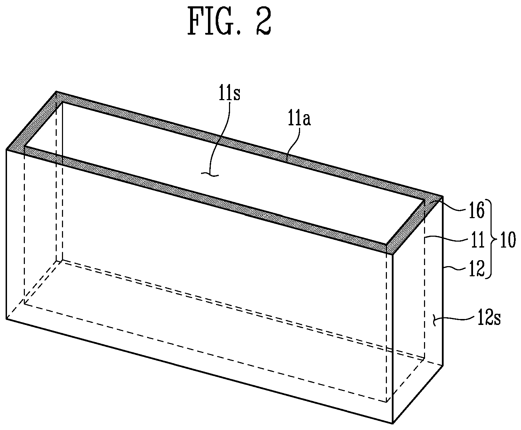

FIG. 2 is an example of a cell case 10 according to the present disclosure.

The cell case 10 may comprise a first body 11 accommodating the electrode assembly 15 and a second body 12 accommodating the first body 11. In other words, the cell case 10 may be formed as a case with a double layer structure. This is to utilize the space between the first body 11 and the second body 12 as an insulating space.

If the first body 11 forms the inner side of the cell case 10, then the second body 12 may form the outer side of the cell case 10, i.e., among the first body 11 and the second body 12, the one exposed to the outside is the second body 12.

The first body 11 may include a first opening 11a having at least a portion of its first surface open, and a first accommodation space 11s for accommodating the electrode assembly 15 through the first opening 11a.

Preferably, the first opening 11a may be formed on an upper surface of the first body 11, but is not limited thereto.

The second body 12 may include a second opening 12a with on side opened, see FIG. 3, and can accommodate the first body 11 inside through the second opening 12a.

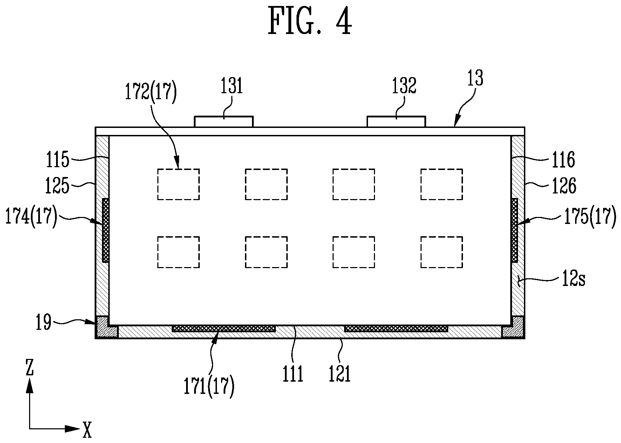

In order for the second body 12 to accommodate the first body 11, the volume of the second body 12 may be larger than the volume of the first body 11. Thus, the first body 11 may be spaced apart from the second body 12 and accommodated inside the second body 12. To this end, the battery cell 100 according to the present disclosure may further comprise a support member 19, see FIG. 4.

Further, since the volume of the first body 11 is smaller than the volume of the second body 12, an empty space may be formed between the first body 11 and the second body 12 when the first body 11 is accommodated in the second body 12. In the present disclosure, the empty space is referred to as the second accommodating space 12s.

In other words, the second accommodation space 12s may refer to the remaining internal space of the second body 12 excluding the space occupied by the first body 11.

For example, the gap between the first body 11 and the second body 12 may be more than 1 mm and less than 20 mm. By way of example only, the gap spaced apart of the first body 11 and the second body 12 may vary depending on the size of the first body 11 and the second body 12. Further, the gap of the first body 11 and the second body 12 may vary depending on the position of a side of the first body 11 and a side of the second body 12 facing the side of the first body 11.

The cell case 10 may further comprise a connecting surface 16 for closing the space between the first opening 11a and the second opening 12a when the first body 11 is inserted into the second body 12.

The connecting surface 16 may be formed by the first body 11 being bent toward the second body 12 along a perimeter of the first opening 11a and connected to the second body 12. Alternatively, the first body 11 may be formed by the first body 11 being bent toward the second body 12 along a perimeter of the first opening 11a, and by the second body 12 being bent toward the second body 12 along a perimeter of the second opening 12a and then connected to each other to form the connecting surface 16.

Further, referring to FIGS. 2 and 3, the cell case 10 comprises a first opening 11a formed on a side of the first body 11 and communicating with the outside, a second opening 12a formed on a side of the second body 12 positioned in the same direction as the side of the first body 11, see FIG. 3, and a connecting surface 16 along a perimeter of the first opening 11a connecting the perimeter of the first opening 11a and the perimeter of the second opening 12a to each other, thereby separating the second accommodation space 12s from the outside.

And, referring to FIGS. 1 and 2, the cell case 10 may further comprise a cap assembly 13 in contact with the connecting surface 16 and covering the first opening 11a.

Alternatively, it may be formed when the first body 11 and the second body 12 are bent and molded from a single sheet. The connecting surface 16 may be formed in any manner as long as the space between the first opening 11a and the second opening 12a can be closed.

Thus, the second accommodating space 12s may be isolated from the outside. In the context of the present disclosure, isolation may refer to a state in which any one of the spaces is isolated from the outside, such that there is no movement of air from one of the spaces to the other, except for air molecules diffusing through the bulkheads forming either space.

For example, the pressure in the second accommodation space 12s may be less than or equal to the external atmospheric pressure, i.e., the second accommodation space 12s may perform an insulating function.

To maximize the thermal insulation of the second accommodation space 12s, the second accommodation space 12s may be in a vacuum.

Preferably, the first opening 11a and the second opening 12a may be formed at the same height. Thus, the connecting surface 16 may be aligned with a first bottom 111 (see FIG. 4), which is a bottom surface of the first body 11, or with a second bottom 121 (see FIG. 4), which is a bottom surface of the second body 12. The cap assembly 13 may be in contact with the connecting surface 16 to close the first opening 11a.

Further, the first body 11 and the second body 12 may be formed of aluminum, or may be formed of an aluminum alloy containing portions of metallic materials such as nickel, iron, copper, manganese, and molybdenum, or may be formed of a conductive metal such as steel plated with nickel.

Generally, the first body 11 and the second body 12 may be formed from the same material, but may also be formed from different materials.

FIG. 3 is an example of a decomposition of a cell case according to the present disclosure.

Specifically, FIG. 3 is an exploded view of the first body 11 and second body 12 of FIG. 2 for illustrative purposes.

Referring now to FIG. 3, the first body 11 may include a first opening 11a with a side opened, and may form a first accommodation space 11s communicating with the outside through the first opening 11a.

The first body 11 comprising a first bottom 111 forming a bottom surface of the first accommodation space 11s, a first elongate sides 113 and a second elongate sides 114 extending from edges of the first bottom 111 and facing each other among the sides of the first accommodation space 11s, a first connecting side 115 and a second connecting side 116 extending from an edge of the first bottom 111 and facing each other and connecting with the first elongate side 113 and the second elongate side 114.

The first bottom 111 may be a square-shaped plate.

The first elongate side 113 and the second elongate side 114 may extend from one pair of edges of the first bottom 111 that face each other. Similarly, the first connecting side 115 and the second connecting side 116 may extend from another pair of mutually facing edges of the first bottom 111.

The second body 12 may comprise a second opening 12a with a side opened, and may form an inner space 12p communicating with the outside through the second opening 12a.

The second body 12 may include a second bottom 121 opposite the first bottom 111, a first opposing side 123 and a second opposing side 124 facing the first elongate side 113 and the second elongate side 114, respectively, and a first spaced apart side 125 and a second spaced apart side 126 facing the first connecting side 115 and the second connecting side 116, respectively.

As described above, the second accommodation space 12s may be formed in the remaining space of the inner space 12p, excluding the space occupied by the first accommodation space 11s and the first body 11.

That is, the second accommodation space 12s may be formed in at least one of between the first bottom 111 and the second bottom 121, between the first elongate side 113 and the first opposing side 123, between the second elongate side 114 and the second opposing side 124, between the first connecting side 115 and the first spaced apart side 125, and between the second connecting side 116 and the second spaced apart side 126.

FIG. 4 is a front view of a battery cell according to the present disclosure.

In the following description of the cell case 10, portions that are identical to the portions described in FIGS. 1 through 3 are omitted.

A battery cell 100 according to the present disclosure may comprise a cell case 10 including a first body 11 forming a first accommodating space 11s accommodating an electrode assembly 15 therein, a second body 12 accommodating at least a portion of the first body 11, and a second accommodating space 12s formed between the first body 11 and the second body 12, and a variable member 17 disposed in the second accommodating space 12s and connected to the first body 11, and connected to or separated from the second body 12 in accordance with a preset variable temperature.

Since the present disclosure secures insulation performance in a low-temperature environment lower than room temperature while allowing a certain degree of heat dissipation in a high temperature environment higher than room temperature, the present disclosure can secure the performance, lifespan, and safety of the battery cell 100 in a wide temperature range, and can reduce the energy consumed for thermal management of the battery cell 100. To this end, the battery cell 100 according to the present disclosure may include a variable member 17 that connects the first body 11 and the second body 12, or separates the first body 11 and the second body 12, based on a preset variable temperature.

The variable member 17 may act as a bridge connecting the first body 11 and the second body 12 to allow heat from the first body 11 to move toward the second body 12 at or above the variable temperature (e.g., in a high temperature environment).

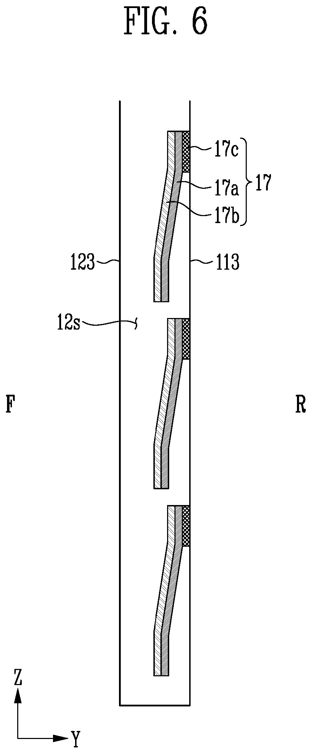

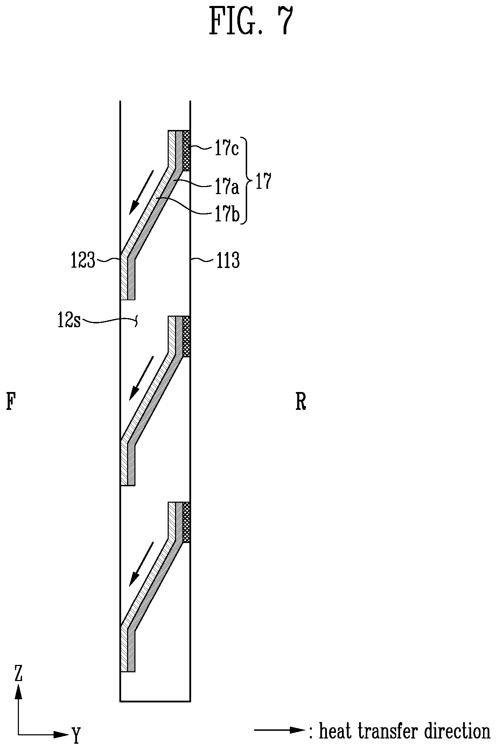

Further, the variable member 17 may separate the connection between the first body 11 and the second body 12 below the variable temperature (e.g., in a low temperature environment), thereby reducing the cooling rate of the battery cell 100, thereby preventing excessive cooling of the battery cell 100 and maintaining the temperature of the battery cell 100, specifically, the temperature of the first accommodation space 11s, thereby reducing the energy required to heat the battery cell 100, and thereby improving the performance, life, and reliability of the battery cell 100. The mechanism of the variable member 17 is further described with reference to FIGS. 6 and 7.

In one aspect, the variable member 17 may be a plural.

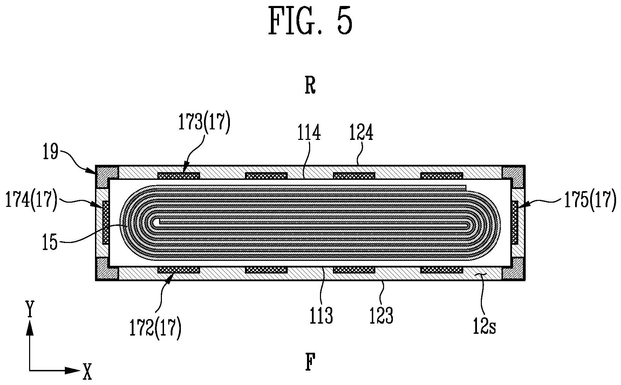

For example, the plurality of variable members 17 may include a first variable member 171 disposed between the first bottom 111 and the second bottom 121, a second variable member 172 disposed between the first elongate side 113 and the first opposite side 123, and a third variable member 173 disposed between the second elongate side 114 and the second opposite side 124 (see FIG. 5).

Further, the plurality of variable members 17 may further comprise a fourth variable member 174 disposed between the first connecting side 115 and the first spaced apart side 125, and a fifth variable member 175 disposed between the second connecting side 116 and the second spaced apart side 126.

Below the variable temperature, the plurality of variable members 17 may be spaced apart from the second body 12 and connected to the first body 11 in a state (hereinafter referred to as a first state).

That is, below the variable temperature, the first variable member 171 may be connected to the first bottom 111 but spaced apart from the second bottom 121, the second variable member 172 may be connected to the first elongate side 113 but spaced apart from the first opposing side 123, and the third variable member 173 may be connected to the second elongate side 114 but spaced apart from the second opposing side 124.

That is, the variable member 17 may be deformed to a first state in which it is connected to the first body 11 but spaced apart from the second body 12 below the variable temperature, and to a second state in which it is in contact with the second body 12 to connect the first body 11 to the second body 12 higher than or equal to the variable temperature.

Further, each of the first variable member 171, the second variable member 172, and the third variable member 173 may be provided in plurality.

Similarly, the fourth variable member 174 may be connected to the first connecting side 115, but spaced apart from the first spaced apart side 125, and the fifth variable member 175 may be connected to the second connecting side 116, but spaced apart from the second spaced apart side 126.

Further, each of the fourth variable member 174 and the fifth variable member 175 may each be provided in plurality.

The battery cell 100 according to the present disclosure may further comprise a support member 19 disposed in the second accommodation space 12s and spacing the first body 11 and the second body 12 apart.

The support member 19 may be arranged to support the first body 11 in the second accommodation space 12s in order to prevent contact of the first body 11 with the second body 12.

As described above, the cap assembly 13 may include a first terminal portion 131 and a second terminal portion 132 that project outwardly in connection with the electrode assembly 15.

FIG. 5 is a top view of a battery cell according to the present disclosure.

As described above, the first body 11 may accommodate an electrode assembly 15 therein.

Referring to FIG. 5, the first elongate side 113, the second elongate side 114, the first opposing side 123, and the second opposing side 124 may be disposed toward the front and rear, respectively, of the battery cell 100. Referring to FIG. 5, the first connecting side 115, the second connecting side 116, the first spaced apart side 125, and the second spaced apart side 126 may be disposed on both sides of the battery cell 100.

Referring to FIG. 5, the battery cell 100 according to the present disclosure may further comprise a plurality of support members 19 disposed in the second accommodation space 12s and spacing the first body 11 and the second body 12 apart.

The plurality of support members 19 may be disposed on the outer surface of the first body 11 along the perimeter of the first bottom 111. The number of the plurality of support members 19 may be varied depending on the design.

In one example, the plurality of support members 19 may be disposed in a region including each vertex of the first bottom 111.

That is, each of the plurality of support members 19 may be disposed in at least one of a region including a vertex at which the first bottom 111, the first elongate side 113 and the first connecting side 115 meet, a region including a vertex at which the first bottom 111, the first elongate side 113 and a second connecting side 116 meet, a region including a vertex at which the first bottom 111, the second elongate side 114 and the first connecting side 115 meet, and a region including a vertex at which the first bottom 111, the second elongate side 114 and the second elongate side 116 meet.

As described above, referring to FIGS. 4 and 5, the variable member 17 may be provided in a plurality, and the plurality of variable members 17 may comprise a first variable member 171 disposed between the first bottom 111 and the second bottom 121, a second variable member 172 disposed between the first elongate side 113 and the first opposing side 123, and a third variable member 173 disposed between the second elongate side 114 and the second opposing side 124.

Further, each of the first variable member 171, the second variable member 172, and the third variable member 173 may be provided in plurality.

The plurality of second variable members 172 and the plurality of third variable members 173 may be arranged to face each other and correspond one-to-one.

Further, the fourth variable member 174 and the fifth variable member 175 may each be provided in a plurality. Further, the plurality of fourth variable members 174 and the plurality of fifth variable members 175 may be arranged to face each other and correspond one-to-one.

FIG. 6 illustrates a variable member in a first state according to the present disclosure.

Specifically, FIG. 6 illustrates a first sate of the variable member according to the present disclosure.

As described above, the variable member 17 may maintain a first state in which it is connected to the first body 11 at a temperature below the variable temperature but spaced apart from the second body 12, and may be deformed to a second state in which it is in contact with the second body 12 to connect the first body 11 to the second body 12 at a temperature higher than or equal to the variable temperature.

The first state may refer to a state in which the battery cell 100 is operating normally, i.e., at a temperature below the variable temperature, the first state may refer to a state in which the variable member 17 is turned off such that the heat transfer path between the first body 11 and the second body 12 is blocked.

For example, in a low temperature state where the outside temperature is below the temperature of the first accommodation space 11s, the variable member 17 may not connect the first body 11 and the second body 12, and the second accommodation space 12s may perform an insulating function because the second accommodation space 12s remains less than the outside atmospheric pressure. Therefore, heat from the first accommodation space 11s or the first body 11 will not be able to escape. Therefore, in the low temperature state, the battery cell 100 may be prevented from being excessively cooled. This means that the energy required to maintain the temperature of the battery cell 100 can be reduced.

The variable member 17 may include a first layer 17a having a first coefficient of thermal expansion, and a second layer 17b having a second coefficient of thermal expansion disposed to the first layer 17a, but smaller than the first coefficient of thermal expansion.

Further, the variable member 17 may further comprise an attachment portion 17c for attaching the first layer 17a to an outer surface of the first body 11.

The first layer 17a may be located closer to the first body 11 than the second layer 17b.

For example, the variable member 17 may be bimetallic.

The variable member 17 may be attached in various forms to the outer surface of the first body 11 or may be integrally formed with the first body 11.

Meanwhile, the outer side of the first body 11 may be a side facing the second body 12 at any one of the first bottom 111, the first elongate side 113, the second elongate side 114, the first connecting side 115, and the second connecting side 116.

Alternatively, an inner side of the second body 12 may be a side facing the first body 11 at any one of the second bottom 121, the first opposing side 123, the second opposing side 124, the first spaced apart side 125, and the second spaced apart side 126.

FIG. 7 illustrates the variable member in a second state according to the present disclosure.

Specifically, FIG. 7 illustrates a second state of the variable member according to the present disclosure.

FIG. 6 illustrates an example wherein the variable member 17 is in a first state, while FIG. 7 illustrates an example of a second state wherein the variable member 17 is in contact with the second body 12 to connect the first body 11 to the second body 12 at a temperature higher than or equal to the variable temperature.

The second state may refer to a state in which the variable member 17 is connected between the first body 11 and the second body 12 above the variable temperature (e.g., in a high temperature environment). In this way, heat from the first accommodation space 11s or the first body 11 may be discharged to the outside via the second body 12.

At a temperature higher than or equal to the variable temperature, the first layer 17a, which has a larger coefficient of thermal expansion than the second layer 17b, may bend toward an inner surface of the second body 12 such that the variable member 17 physically connects the first body 11 to the second body 12.

In other words, the variable member 17 can be turned on to create a heat transfer path between the first body 11 and the second body 12 to dissipate heat from the battery cell 100.

The variable member 17 may act as a conduit for moving heat generated inside to the outside by way of heat conduction.

On the one hand, the variable member 17 may be a switched plate type (e.g., bimetallic) that utilizes differences in coefficient of thermal expansion as described above. Alternatively, the variable member 17 may be a thermally expanding ball, spring, or wire to selectively connect the first body 11 and the second body 12 according to the variable temperature.

Further, the variable member 17 may receive an electrical, magnetic, or physical signal from an external source to selectively connect the first body 11 and the second body 12.

It is understood by those skilled in the art that the plurality of exemplary embodiments described above are specific examples of the following aspects.

Aspect 1: A battery cell comprising: a cell case including a first body forming a first accommodation space for accommodating an electrode assembly therein; a second body accommodating at least a portion of the first body; and a second accommodation space formed between the first body and the second body; and a variable member disposed in the second accommodation space and connected to the first body, and connected to or separated from the second body according to a preset variable temperature.

Aspect 2: The battery cell according to Aspect 1, wherein the cell case may further comprise a first opening formed on a side of the first body and communicating with the outside, a second opening formed on a side of the second body positioned in the same direction as the side of the first body, and a connecting surface connecting the perimeter of the first opening and the perimeter of the second opening along the perimeter of the first opening to separate the second accommodation space from the outside.

Aspect 3: The battery cell according to Aspect 2, wherein the cell case may further comprise a cap assembly in contact with the connecting surface and covering the first opening.

Aspect 4: The battery cell according to any one of Aspects 1 to 3, wherein the variable member may comprise a first layer having a first coefficient of thermal expansion; and a second layer disposed on the first layer and having a second coefficient of thermal expansion smaller than the first coefficient of thermal expansion.

Aspect 5: The battery cell according to Aspect 4, wherein the first layer may be located closer to the first body than the second layer.

Aspect 6: The battery cell according to any one of Aspects 1 to 5, wherein the battery cell may further comprise a support member disposed in the second accommodation space spacing the first body and the second body.

Aspect 7: The battery cell according to any one of Aspects 1 to 6, wherein the first body may comprise a first bottom forming the bottom surface of the first accommodation space, a first elongate side and a second elongate side extending from an edge of the first bottom and facing each other among the sides of the first accommodation space, and a first connecting side and a second connecting side extending from an edge of the first bottom and facing each other, and connecting with the first elongate side and the second elongate side, and wherein the second body comprises a second bottom opposite the first bottom, a first opposing side and a second opposing side facing the first elongate side and the second elongate side respectively, and a first spaced apart side and a second spaced apart side facing the first connecting side and the second connecting side respectively.

Aspect 8: The battery cell according to Aspect 7, wherein the variable member may be a plural, and the plurality of variable members may comprise a first variable member disposed between the first bottom and the second bottom, a second variable member disposed between the first elongate side and the first opposing side, and a third variable member disposed between the second elongate side and the second opposing side.

Aspect 9: The battery cell according to Aspect 7 or 8, wherein the plurality of variable members may further comprise a fourth variable member disposed between the first connecting side and the first spaced apart side and a fifth variable member disposed between the second connecting side and the second spaced apart side.

Aspect 10: The battery cell according to any one of Aspects 1 to 9, wherein the battery cell may further comprise: a plurality of support members disposed in the second accommodation space and spacing the first body and the second body apart.

Aspect 11: The battery cell according to Aspect 10, wherein the plurality of support members may be disposed on an outer surface of the first body along a perimeter of the first bottom.

Aspect 12: The battery cell according to Aspect 10, wherein the plurality of support members may be disposed in a region including each vertex of the first bottom.

Aspect 13: The battery cell according to any one of Aspects 1 to 12, wherein the pressure in the second accommodation space may be less than or equal to the external atmospheric pressure.

Aspect 14: The battery cell according to any one of Aspects 1 to 13, wherein the second accommodation space may be in a vacuum.

Aspect 15: The battery cell according to any one of Aspects 1 to 14, wherein the variable member maintains a first state in which it is connected to the first body, and is separated from the second body at a temperature below the variable temperature, and the variable member is transformed into a second state in which it is in contact with the second body to connect the first body and the second body at a temperature higher than or equal to the variable temperature.

The above description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being included in the scope of the present disclosure.

## Claims

1. A battery cell comprising:
a cell case including a first body forming a first accommodation space for accommodating an electrode assembly therein, a second body accommodating at least a portion of the first body, and a second accommodation space formed between the first body and the second body; and
a variable member disposed in the second accommodation space and connected to the first body, and connected to or separated from the second body according to a preset variable temperature.

2. The battery cell according to claim 1, wherein the cell case further comprises a first opening formed on a side of the first body and communicating with the outside, a second opening formed on a side of the second body positioned in the same direction as the side of the first body, and a connecting surface connecting the perimeter of the first opening and the perimeter of the second opening along the perimeter of the first opening to separate the second accommodation space from the outside.

3. The battery cell according to claim 2, wherein the cell case further comprises a cap assembly in contact with the connecting surface and covering the first opening.

4. The battery cell according to any one of claims 1 to 3, wherein the variable member comprises a first layer having a first coefficient of thermal expansion, and a second layer disposed on the first layer and having a second coefficient of thermal expansion smaller than the first coefficient of thermal expansion.

5. The battery cell according to claim 4, wherein the first layer is located closer to the first body than the second layer.

6. The battery cell according to any one of claims 1 to 5, further comprising: a support member disposed in the second accommodation space spacing the first body and the second body.

7. The battery cell according to any one of claims 1 to 6, wherein the first body comprises a first bottom forming the bottom surface of the first accommodation space, a first elongate side and a second elongate side extending from an edge of the first bottom and facing each other among the sides of the first accommodation space, and a first connecting side and a second connecting side extending from an edge of the first bottom and facing each other, and connecting with the first elongate side and the second elongate side, and
wherein the second body comprises a second bottom opposite the first bottom, a first opposing side and a second opposing side facing the first elongate side and the second elongate side respectively, and a first spaced apart side and a second spaced apart side facing the first connecting side and the second connecting side respectively.

8. The battery cell according to claim 7, wherein the variable member is a plural, and the plurality of variable members comprise a first variable member disposed between the first bottom and the second bottom, a second variable member disposed between the first elongate side and the first opposing side, and a third variable member disposed between the second elongate side and the second opposing side.

9. The battery cell according to claims 7 or 8, wherein the plurality of variable members further comprise a fourth variable member disposed between the first connecting side and the first spaced apart side, and a fifth variable member disposed between the second connecting side and the second spaced apart side.

10. The battery cell according to any one of claims 1 to 9, further comprising: a plurality of support members disposed in the second accommodation space and spacing the first body and the second body apart.

11. The battery cell according to claim 10, wherein the plurality of support members are disposed on an outer surface of the first body along a perimeter of the first bottom.

12. The battery cell according to claim 10, wherein the plurality of support members are disposed in a region including each vertex of the first bottom.

13. The battery cell according to any one of claims 1 to 12, wherein the pressure in the second accommodation space is less than or equal to the external atmospheric pressure.

14. The battery cell according to any one of claims 1 to 13, wherein the second accommodation space is in a vacuum.

15. The battery cell according to any one of claims 1 to **14,** wherein the variable member maintains a first state in which it is connected to the first body, and is spaced apart from the second body at a temperature below the variable temperature, and the variable member is transformed into a second state in which it is in contact with the second body to connect the first body and the second body at a temperature higher than or equal to the variable temperature.
